# EUROPEAN PATENT APPLICATION

(11) **EP 4 755 605 A1**
(43) Date of publication of application: **10.06.2026**
(21) Application number: 25217432.1
(22) Date of filing: 20.11.2025
(51) Int. Cl.: B29C 44/56, B26D 3/06, B32B 5/18, B32B 38/00, E04C 2/292, B29C 67/20, B29K 105/26, B29L 7/00

(54) **IMPROVED METHOD FOR THE PRODUCTION AND PROFILING OF INSULATING PANELS AND RELATED APPARATUS**

(30) Priority: 03.12.2024 IT 202400027348
(71) Applicant: Cannon Ergos S.p.A., 21042 Caronno Pertusella (VA) (IT)
(72) Inventor: VOLPATO, Marco, 21042 Caronno Pertusella (VA) (IT); CORTI, Maurizio, 22100 Como (IT); BOSCARI, Luciano, 21042 Caronno Pertusella (VA) (IT); CORAZZINA, Massimo, 21042 Caronno Pertusella (VA) (IT)
(74) Representative: Botti & Ferrari S.p.A.

(57) **Abstract**

An improved method (100) for the production and profiling of insulating panels is herein described, comprising a central layer and two outer coating layers on surfaces which are opposite the central layer, said method comprising at least the following steps:
- production (101) of a continuous strip of insulating panel;
- first sectioning cut (103) of a first panel segment (5) that is transverse to a sliding direction of the continuous strip;
- longitudinal lateral profiling (104) of the first panel segment (5);
- second multiple transverse cut (105) of the first panel segment (5) into a plurality of second panel segments (10) and preferably transverse squaring and profiling (106) of the second segments;
and furthermore comprising
at least one of the longitudinal lateral profiling step (104) and/or second multiple transverse cut step (105) and/or transverse squaring and profiling step (106) comprises a removal, or peeling (107) step, and collating at least one portion of at least one or both the two outer layers, and a separate removal and recovery step (108) and collating the related central layer,
wherein the removal step (107) comprises an incision, lifting, or removal, removing and collating step (109) of at least one of two strips or both comprising the outer coating layers of surfaces which are opposite the central layer, thus generating a surface groove by cutting and removing the outer layers comprising a first foam thickness adhering thereto at the surface groove.

A related production and profiling plant of insulating panels is also described.

## Description

### Field of application

The present invention relates to an improved method for the production and profiling of insulating panels, optimised in particular in the edge finishing and separation process of the related waste produced, and to a related plant.

Said invention finds application in particular in the field of plants for the production in continuous of thermal insulation panels with a "flexible" coating of the upper and lower surfaces, generally made of a panel foaming and formation area, panel which develops and polymerizes in a double-belt conveyor, and of a trimming, cutting, shaping area at the outlet of the conveyor, wherein the panel produced in continuous is cut into sheets, cooled and finished to size with edge shaping before being stacked, packaged, and shipped.

The following description is made with reference to this application field with the sole purpose of simplifying the exposure thereof.

### Prior art

As is well known, the concerned field involves production plants for polyurethane foam insulating panels with a flexible coating layer, manufactured on continuous production lines.

The panel forming line is normally made up of a plant for dosing, mixing and dispensing the reagent resin to form the polyurethane foam, and a double belt or double chain conveyor.

Two strips made of interconnected sheets run in parallel and contain the foam during the expansion and consolidation step within the two substrates.

The substrates forming the lower and upper surfaces of the panel are composed of flexible material strips, which may be millimetre-thick aluminium or paper reinforced with glass fibres, or paper coated with bituminous layers and reinforced with synthetic fibres.

The product that comes out of the conveyor with two parallel strips is a foam continuous sheet covered by the two upper and lower substrates, which are called "flex faced panels".

The panel, which is produced in a continuous length when comes out of the conveyor, must be sectioned into manageable-sized sheets in order to proceed to the subsequent conveying and processing steps.

These processes essentially consist of finishing and profiling the edges to make them geometrically precise and couplable during installation and assembly.

Sometimes, but not always, an initial step of trimming the side edges is provided.

At the same time, a transverse cutting step is provided, with opposite cuts made while the panel is moving.

Transverse cutting is called "on-the-fly cutting" since it is performed through a blade that follows the longitudinal movement of the panel as it moves transversely to the cut.

Transverse cutting is necessary to form panels in separate sheets measuring multiples of 60 cm in Europe and other countries that use the metric system, and multiples of 2 feet in the USA and neighbouring countries.

Normally, the sheets are cut to a width of 1200 mm, plus an excess necessary to compensate for the thickness of the cut, and a length of just over 6 metres, where the excess is due to the same reason.

After this operation, the sheets, which are hot due to the heat developed by the foam formation reaction, are directed by moving them transversally onto a temporary accumulation system called "cooler" where they are positioned individually in niches, the latter being moved step by step and formed by cage bars that keep the plates in a vertical position resting on the long side, allowing the heat to be dispersed through natural or forced ventilation.

In the temporary accumulation system, the sheets advance step by step for several minutes, even for several tens of minutes, depending on the thickness, so as to ensure the consolidation of the foam for complete polymerization, as well as the cooling of the thickness even in the central core of each sheet.

Cooling is also useful to stabilize the contraction or shrinkage step of the panel which is still expanded due to the high temperature; the extent of this shrinkage depends on the thickness of the panel and the type of foam composition and is therefore predictable but with a wide variance.

Upon exiting from the cooler, the panels are moved longitudinally and are profiled and calibrated along the longitudinal sides.

In this step, the longitudinal edge profile is directly obtained along the longitudinal sides, with the shape provided for by the production batch. This profile can be straight, overlapping, or interlocking, for instance.

Profiling is preferably performed with toothed circular saw blades or circular cutters.

For panels with straight edges, which typically have final dimensions of 600 x 600 mm, a longitudinal median cut is also performed, producing two 600 mm wide panels.

After longitudinal profiling, the panels are moved transversely along the long side to enter a multiple sectioning system, also known as a "multiple cutter", which makes the separation transverse cuts into multiple panels, preferably performed with circular toothed blades.

If the panel edge needs to be profiled in an overlapping or interlocking manner, a further multiple profiling and squaring station performs the removal by means of profiling tools on the transverse edges.

The multiple cutter and subsequent profiling station, if active, produce panels in sheets generally 1200 mm in nominal width, although in some cases a nominal width of 600 mm may also be provided, with final profiles as specified in the production batch, geometrically precise dimensions suitable for junction along the edges for installation, packaging, and transportation.

All these cutting and profiling steps produce rigid polyurethane foam and flexible covering waste from the cutting chips.

The quantity of chips is very high since the production process occurs in continuous and at speeds that, with the refinement of the process, are constantly increasing, with ever higher production thicknesses to ensure the increasingly high standards of thermal insulation required for the energy classification of buildings.

A single line can produce, for instance, panels with an average thickness of 8 cm and a width of 1200 mm every day, with an average flow speed of 45 m/min and operating, for instance, for 20 hours/day.

By producing foam with a density of 36 g/l, the chips vary from 1.2% to 3% of the total, so every day waste is produced that varies in weight from 2.2 tonnes to 6.6 tonnes, with an economic impact deriving from the discarded material whose value can be estimated at € 2 to € 3/kg.

Therefore, the recycling of industrial polyurethane waste linked to the production process is a very pressing issue, given the quantity of waste produced, its value and the need for reuse resulting from progressive industry regulations that require percentages of recycled material in foam and increasingly high disposal costs, also taking into account that thermal insulation requirements for buildings will stimulate everincreasing production of these panels over the next decade.

For these reasons, technologies are being developed for both the mechanical and chemical recovery and reuse of waste.

To date, however, given the presence of polyurethane mixed with coating residues in the waste, which generally include, for instance, bituminous paper reinforced with glass fibres or millesimal aluminium, and despite the fact that these make up only about 5% of the panel portions reduced to scrap, the chips containing coating pose a problem for the recycling of this waste and only allow for the recycling of the latter, mainly in the form of bricks obtained by compaction to be used as fuel in cement factories, waste-to-energy plants or other facilities.

However, this is increasingly proving insufficient, given that the panels produced are also certified based on their recycled and reused content. Among the certifications currently required in some European countries for public buildings only, but soon to be extended to private ones, there is the obligation to adopt panels that can be recycled or that are produced with a guarantee of waste recycling.

For these reasons, the current issue focuses not only on the recycling and reuse of the panels themselves, but above all on the recycling and reuse of the waste obtained during the processing of the panels for the production of panels made from partially and sometimes even totally recycled material.

The delivery of waste for thermal destruction is also burdened by everincreasing costs for its collating.

The solutions currently in use are therefore no longer adequate for the current obligations and economic requirements for the use of this type of panel.

EP 3 380 283 B1 describes an apparatus for manufacturing panels of expanded plastic material, comprising a support frame, a plate-like element to be cut, a cutting station and an unloading device. The cutting station comprises a support structure, a cutting portion moved by related means with respect to the plate-like element, and a cutting station with a first cutting blade. The apparatus comprises a device for extracting the dust generated, associated with a device for sending this dust to a foaming apparatus.

Therefore, the technical problem faced in the present invention is to provide a technical solution that solves the current problems and drawbacks present in the prior art for recycling and reuse of waste which, being composed of and also contaminated by particles containing coating materials, is not suitable for chemical recycling or for reintroduction into the foam matrix without altering the properties thereof.

An object of the invention is also to provide a solution that allows maximum optimisation of the reuse of recyclable components from waste.

A further object of the invention is to provide a solution that can be also implemented in prior art systems, with the changes to be made not having a particularly significant impact on the overall modification of the production facilities, timelines and production costs.

Finally, an object of the invention is to provide a solution that allows a production in line with ever increasingly stringent requirements and certifications for the composition of insulating panels.

### Summary of the invention

The solution idea underlying the present invention is to provide a different division of the cutting and profiling steps that result in the formation of less waste or, in any case, waste whose major quantity is formed by foam that is not contaminated by other components, particularly parts that make up the coating.

Based on said solution idea, the technical problem is solved by an improved method for the production and profiling of insulating panels comprising a central layer, preferably made of thermosetting foam, and two outer coating layers on surfaces that are opposite the central layer, said method comprising at least the steps of production of a continuous strip of insulating panel, first sectioning cut of a first panel segment which is transverse to a sliding direction of the continuous strip, longitudinal lateral profiling of the first panel segment, a second multiple transverse cut of the first panel segment into a plurality of second panel segments and preferably transverse profiling of said second segments, wherein at least one of the longitudinal lateral profiling step and/or the second multiple transverse cutting step and/or the transverse squaring and profiling step comprises a removal, or peeling, and collating step, of at least one portion of at least one of the two outer coating layers adjacent the edges to be profiled, and a cutting, removal and collating step of the related central layer, generally made of foam removed by profiling.

The removal step comprises an incision, lifting, or removal, removing and collating step of at least one of two strips or both comprising the outer coating layers of surfaces that are opposite the central layer, thus generating a surface groove by cutting and removing the outer layers comprising a first foam thickness adhering thereto at the surface groove.

In other words, advantageously, a preliminary removal of the surface layers is created, at which cutting and/or profiling operations can subsequently be performed to only remove the foam that forms the central part of the panel edges, thus generating conveniently reusable scrap.

Preferably, the removal, or peeling, and collating step of both layers opposite the central foam is provided.

In other words, longitudinal and transverse profiling is provided, wherein at least one of the profiling steps comprises a removal, or peeling, and separation step of at least one portion of each of the two outer coating layers and a removal and recovery step separated from the related central layer of removed foam.

Advantageously, the present solution allows removing the outer layer of the panel surface coating in a first step, which generates impurities in the form of scrap, and collecting it separately, and then proceeding with cutting and profiling to size the edges of the various panels according to the desired dimensions, thus obtaining in this case material scrap that is uncontaminated and much easier to be processed for reuse.

In this case, in fact, for instance, it is possible to mix the sufficiently pulverised scrap with polyol, thus obtaining a creamy compound that can then be pumped, dosed and reacted with isocyanate to obtain a foam having insulating features that are similar to the "new" material.

It is also feasible, albeit more complex, to provide a real chemical recycling, which involves introducing the uncontaminated scraps obtained from cutting and/or profiling into a reactor containing glycols, bringing the whole mixture to a temperature of around 220-250 °C to decompose the foam that then reverts to polyol, which only needs to be treated to remove other unwanted components, such as amines.

Preferably, the longitudinal lateral profiling step and preferably the transverse profiling step remove and shape the profile of the central layer of insulating foam up to a desired edge of the respective removed outer coating.

Advantageously, preparation is therefore carried out for cutting and profiling in the positions where the edge of the final shaped panel must be created from the initial strip through successive operations.

Preferably, the incision, lifting, or removal, removing and collating step of at least one of said two strips or both said two strips of the opposite outer coating layers is carried out at the final profiling edges of the panel comprising the coating and a first foam thickness adhering thereto.

Nothing prevents from providing a different type of removal step with a pre-incision of the single panel strip, or a different removal mode from the incision, lifting or removal, removing and collating step, all these variants being comprised in the scope of the appended claims.

According to an embodiment, the incision, lifting, or removal, removing and collating step of a strip to make a surface groove is carried out by means of at least one toothed rotating blade tool and provides a collating step of the chips produced by suction conveyed through a suction hood which includes said tool.

Advantageously, the present solution is structurally and functionally simple and at the same time allows for fairly precise cutting in terms of both cutting depth and width of the surface groove generated.

Alternatively, incision, lifting, or removal, removing and collating step of at least one strip of the surface layer is carried out by means of at least one incision along crossed planes, one of which is perpendicular to the surface to be removed and one is parallel to the surface layer to be removed, said at least one incision being carried out by means of a smooth-edged blade cutting tool, preferably fixed.

According to an alternative embodiment, said incision steps are carried out by means of at least one smooth-edged blade rotating circular tool.

According to an alternative embodiment, said incision and removal steps are carried out by means of at least one smooth-edged blade tool energized and set in vibration by ultrasonic frequency vibrations.

According to an alternative embodiment, said incision steps are carried out by means of at least one smooth-edged blade rotating circular tool energized and set in vibration by ultrasonic frequency vibrations.

Advantageously, the present solution, although more complex than the previous one, allows for very precise cutting without pressure, thus avoiding deformation with malleable materials, such as soft materials, high cutting speeds and little need for cleaning after cutting.

According to an embodiment, the incision, lifting, or removal, removing and collating step of at least one of the two strips of the opposite outer coating layers provides a lifting and a shredding of the at least one of the two strips, preferably inside a suction hood.

Nothing prevents from providing different types of incision, removal and removing for each of the two strips.

Advantageously, in this case the shredding step of the removed layers is carried out in a separate position from the area of the panel to be profiled and cut, so that they can then be more easily removed through the appropriate ducts.

Alternatively, the incision, lifting, or removal, removing and collating step of at least one of the two strips of the outer coating layers provides the lifting and winding around a rotating shaft or reel located downstream of the lifting.

Advantageously, the present solution provides for immediate separated removal of unwanted layers for recycling, although this requires carrying out the separation directly at the panel.

Advantageously, in this case, a real "peeling" of the outer layers is carried out at the desired cutting surface groove.

Furthermore, preferably, the method according to the invention comprises an outputting step of an air flow grazing the opposite layers to be removed at the at least two strips of the opposite layers in the removal step and a, preferably simultaneous, suction step of said strips.

Preferably, the suction is carried out on the side opposite the inletting of the removed parts in the form both of waste cut by a tool, for instance toothed, and of strips cut by incision and removed in broken or continuous form.

Therefore, advantageously, simultaneously to removing the surface layer strip, an air flow is produced that carries away the waste to be removed, whether it is still in the compact form or already shredded, and this is sucked away, so as not to leave any residue at the surface groove where the finishing and shaping of the panel edges will take place.

Furthermore, preferably, a brushing step is provided at the at least one of the two strips by means of a brushing device.

Advantageously, this also ensures that there are no residues at the surface groove.

Still preferably, the method according to the invention provides a longitudinal pre-calibration step of the edges downstream of the production step of a continuous strip of insulating panel.

Advantageously, this step allows eliminating the foam surface sideways to the irregularly shaped, flattened panel between the outer coating layers, whose shape exceeds the desired perimeter.

Preferably, the longitudinal pre-calibration step as well comprises a removal, or peeling, and collating step of at least one portion of at least one or both the two outer layers, and a separate removal and recovery and collating step of the related central layer.

More preferably, the longitudinal pre-calibration step as well comprises an incision, lifting, or removal, removing and collating step of at least one of the two strips or both the two strips of the opposite outer coating layers, carried out at the final profiling edges of the panel and removing the outer layers and a first foam thickness adhering thereto.

Still more preferably, the method according to the invention further comprises a median longitudinal cutting step for the production of half-width panels comprising a first longitudinal incision, lifting or removal and removing step of at least one of the two stripes or both the two strips of the opposite outer coating layers carried out at the edges of the median longitudinal cut of the panel comprising the coating and a first foam thickness adhering thereto and a subsequent separate removal step of the central section of the panel at the median longitudinal cut.

According to a further aspect of the present invention, a production plant of insulating panels is provided, comprising a central layer and two outer layers opposite the central layer, configured to implement the above described method.

Said plant comprises a foaming, transport and forming station for the continuous strip of insulating panel, a transverse tracking cutting station for producing separate segments from said continuous strip, a cooling station, at least one longitudinal lateral profiling station, at least one transverse multiple cutting station for producing separate panels from the continuous strip, at least one of said stations comprising at least one cutting tool, at least one separate removal and conveying device, removal and collating of a portion of at least one or both the two outer layers, preferably at the edges to be profiled, at least one separation, removal and collating device of the central layer separately from the portion of at least one or both the two outer layers and, preferably, at least one profiling group.

Advantageously, the present plant allows producing a series of insulating panels, thus optimizing the recovery and separation of the waste produced.

Preferably, the plant further comprises a longitudinal central cutting and separation station of the panel provided with a second separation, removal and collating station comprising at least one cutting tool (and collating of a portion of each of the two outer layers at the central separation profile, at least one second separation, removal and collating device of the chip of the central layer.

Advantageously, said solution allows having specialized devices for removing the strips of material present outside a panel in a part and for removing the central layer in another part.

In a further embodiment, the plant comprises at least one longitudinal profiling station of the panel provided with at least one separation, removal and collating section comprising at least one cutting tool and at least one separate removal and conveying device, removal and collating of a portion of at least one or both the two outer layers at the straight or overlapping or interlocking longitudinal profiling shape and at least one longitudinal profiling section for carrying out the longitudinal profiling provided with the separation, removal and collating device of the chip of the central layer separately from the portion of at least one or both the two outer layers and, preferably, with the at least one profiling group.

Advantageously, said solution allows an effective separation between strips of material present outside a panel and the central layer, or core, thereof, which can be separately removed and reused.

In a further embodiment, the plant comprises at least one multiple transverse sectioning cutting station comprising at least one cutting tool for a transverse separation of the panel provided with at least one separation station and at least one removal and collating device of a portion of at least one or both the two outer layers at the at least one of the transverse separation profiles and at least one transverse cutting and separation section provided with the distinct separation, removal and collating device of the chip of the central layer and, preferably, with the at least one profiling group.

In a further embodiment, the plant comprises at least one multiple transverse profiling station provided with at least one transverse squaring and profiling section of the panels, at least one unit of said section comprising a separation, removal and collating unit of a portion of at least one or both the two outer coating layers and at least one cutting tool at the straight or overlapping or interlocking transverse profiling shape and at least one transverse profiling section for at least one of two transverse sides for carrying out a transverse-shaped trimming and provided with the separation, removal and collating device of the chip obtained from the profiling of the central layer separately from the portion of at least one or both the two outer layers and, preferably, provided with at least one profiling group.

Advantageously, it is thus possible to obtain different types of panels with the advantage of the recovery of the removed foam.

In a further embodiment, the plant further comprises a pre-calibration station for carrying out a straight-profile trimming at the exit of a conveyor, the pre-calibration station comprising at least one separation, removal and collating unit of a portion of at least one or both the two outer layers and of a first foam thickness adhering thereto at the outer edges of the panel, the pre-calibration station further comprising the separation, removal and collating device of the chip obtained from the separate removal of the central section of the panel at the pre-calibration edges.

In a further embodiment, the plant comprises at least one own chip suction hood, with electronic adjustment of the vertical position of the bulkheads.

Advantageously, said solution is optimal in removing all of the material of interest thanks to the automatic check of the activation timings.

The features and advantages of the method and of the plant according to the invention will become clearer from the following description of exemplifying embodiments given by way of indicative and non-limiting example with reference to the appended drawings.

### Brief description of the drawings

In these drawings:
- Figure 1 shows a block diagram of a plant and a method for producing insulating panels according to the present invention;
- Figure 2 shows two front and side schematic views of an embodiment of a removal and separation device of a strip of the surface coating layer of a production plant of insulating panels according to the present invention;
- Figure 3 shows two front and side schematic views of an embodiment of another removal and separation device of a strip of the surface coating layer of a production plant di insulating panels according to the present invention;
- Figure 4 shows a front schematic view of a different version of the production plant of insulating panels according to the Figure;
- Figure 5 shows a schematic view of a removal and separation device of two strips of the surface coating layer and for recovery also comprising a profiling and collating device of the foam central intermediate layer according to the invention;
- Figure 5B shows a detail of the profiling and collating device of the central intermediate layer;
- Figure 6 shows a schematic view of an incision, lifting or removal, removing and collating apparatus of the two coating strips on the upper and lower edges of the panel, also comprising a different straight profiling and collating device of the foam intermediate layer provided in a station of the plant according to the invention;
- Figure 7 shows three schematic views, a front view and two side views, of a detail of an alternative for the incision, lifting or removal, removing and collating apparatus of one of the two coating strips on the edges of the panel, of Figure 6;
- Figure 8 shows a station for the longitudinal lateral profiling step 104 with a detail of an apparatus for the longitudinal profiling with separate removal of the coating and of the foam central layer of a panel, provided with circular blades for removing the lower and upper coating strips with the related collating hoods and with two subsequent devices for the longitudinal lateral profiling of the panels with the related suction hoods;
- Figure 9 shows a sectional view of a longitudinal lateral profiling apparatus provided with longitudinal central cutting devices of the panel for making straight-edge panels of a width having a different dimension from the standard according to the invention;
- Figure 9B shows a cross-sectional schematic view of the same apparatus for removal, removing and collating, also comprising a different device made of two central circular blades placed longitudinally offset for the cutting and central severing of the panel for making, when required, a longitudinal dimension reduced to 600 mm;
- Figure 10 shows a side schematic view of a station for a multiple transverse cutting step 105 provided with a single cutting blade of the foam central section;
- Figure 10B shows a front schematic view of the apparatus of Figure 10 where the sections with two upper and lower cutting and severing blades are schematically shown, which are longitudinally offset and suitable for cutting high thickness panels, supported by upper and lower guides for the transverse positioning to size thereof;
- Figure 11 shows a schematic view of a station for a second multiple transverse profiling step 106 with a specific apparatus;
- Figure 12 shows a mode for cutting and profiling an insulating panel;
- Figure 13 shows another mode for cutting and profiling an insulating panel;
- Figure 14 shows another mode for cutting and profiling an insulating panel;
- Figure 15 shows a mode for multiple cutting of insulating panels starting from a first longer insulating panel segment into a plurality of second insulating panel segments;
- Figures 16-20 show exemplifying cutting and removal tools adopted in the apparatuses according to the present invention.

Reference numbers, referred to the same steps even in different embodiments, will be omitted in order to increase the clarity of the Figures.

### Detailed description

With reference to these figures, an improved method for the production and profiling di insulating panels comprising a central layer and two outer coating layers opposite the central layer and a production plant of insulating panels according to the present invention are herein described, which are wholly indicated as method 100 and plant 1.

It should be noted that the figures represent schematic views and are not drawn to scale, but instead they are drawn so as to characterise and enhance the important features of the invention. Furthermore, in the figures, the different components are represented schematically, since their shape may vary depending on the desired application. Finally, particular features illustrated in a figure in relation to an embodiment may also be used in one or more of the embodiments illustrated in the other figures.

Furthermore, elements that are structurally and functionally identical in the various figures, and in particular analogous to the prior art solutions described above, are indicated below with the same alphanumeric references.

In the following description, relative terms such as "on", "under", "upwards", "downwards" will be used referring to the figures just to simplify the exposure thereof.

Finally, indications of particular geometries (circular, rectangular) or of the arrangement of the elements (parallel, orthogonal, contiguous), as well as the term "substantially", are always to be intended in connection to physical elements and not to geometrically abstract elements, therefore they must always take into consideration the representation tolerances introduced by the transition from a pure mathematical/geometric world to the real world.

The plant 1 comprises a roller, belt or double chain transport station 2 that transport a continuous manufactured product of insulating panel formed by a central layer of rigid insulating foam and two outer coating and containment layers that are opposite said central layer. Essentially, the panel is sandwich-shaped with an internal central layer and two opposite outer coating layers.

It is possible to identify a production step 101 of a continuous manufactured product of insulating panel in the transport station 2.

Optionally, a longitudinal pre-calibration station, also called "pretrimming", 3 of the edges is then provided downstream, which carries out a preliminary longitudinal profiling step 102 that allows eliminating the irregular edge of the central foam contained between the outer coating layers that protrudes from the desired perimeter.

In other words, the longitudinal pre-calibration station 3 is provided at the exit of the transport station 2.

Here the upper and lower surfaces of the panel are defined by the presence of the coating layer and are plane since they are formed by the two transport and containment belts that slide in parallel in the foam formation and polymerisation area.

The side edges of the panel, on the other hand, at the exit of the transport station 2, may be slightly curved and jagged due to the expansion of the foam and burrs that form when in contact with the vertical side containment ridges mounted on the double chain conveyor belt, ridges that are not able to carry out a geometrically precise and burr-free foam containment.

In order to obtain geometrically precise and workable panels, it is sometimes, but not always, necessary to remove the curvature and fraying from both edges in this step.

It is convenient for a primary transverse cutting device 4 to be installed and applied in the same station downstream of the longitudinal pre-calibration step 3, which carries out a first tracking-sectioning cut 103 of a first panel segment 5 that is transverse to a sliding direction of the continuous strip.

This station and function are referred to in the industry as "on-the-fly cutting", namely operating with the primary transverse cutting element 4 which tracks and engages the longitudinal movement of the panel, then moves transversally cutting it, so as to form separate panels with a length suitable for the production speed and with measures that are usually multiples of 60 cm in Europe and multiples of 2 feet in the USA. Usually, the panels are pre-calibrated by a width of 120 cm plus an excess necessary to compensate for their shrinkage after cooling and just over 6 metres long, where the excess is useful to still compensate for shrinkage after cooling and the thickness of subsequent cutting.

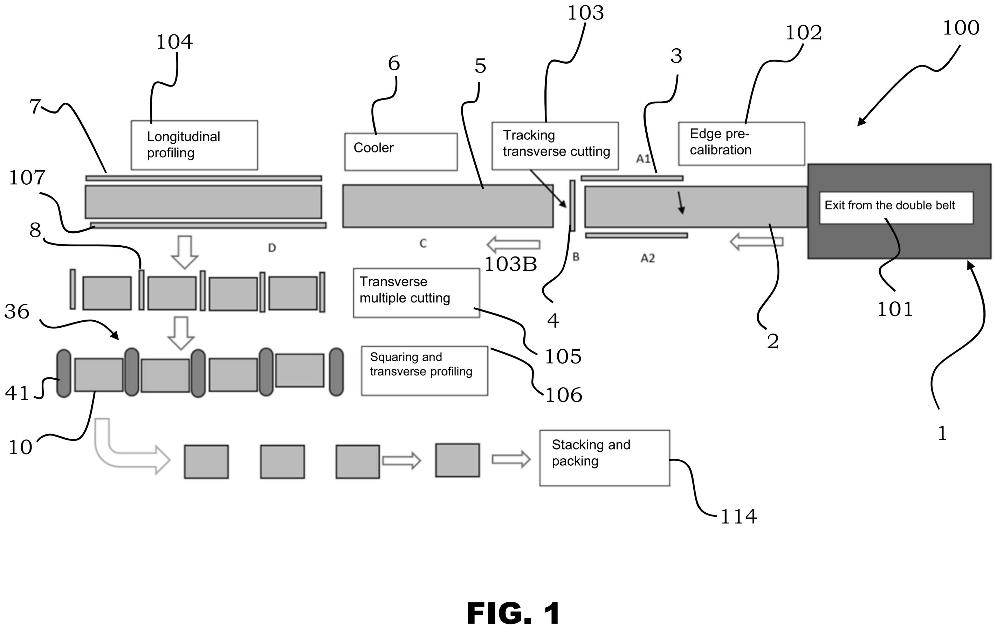

Further to the first cutting 103, a transport and selection station 103B, which is schematically represented in Figure 1 through an arrow, and a cooling station 6 are provided.

Here, the cut panels are temporarily stored individually in niches (not shown) that are moved step by step and formed by cage bars that usually keep the panels in a vertical position resting on the long edge and allow heat dispersion and complete polymerisation through natural or forced ventilation.

The step-by-step advancement in the cooling station generally continues for several tens of minutes, but not limited thereto, in order to ensure the foam consolidation for complete polymerisation, as well as a suitable cooling of the thickness of foam up to the central layer of the panels.

The cooling station 6 is also useful to stabilise the contraction or shrinkage step of the panel, which is still expanded due to the high temperature.

The extent of this shrinkage depends on the thickness of the panel and the type of foam composition, and is therefore predictable but with a wide variance.

Moreover, in this step, each first panel segment sectioned in the on-the-fly cutting station is controlled, and if unsuitable, is discarded, whereas, if suitable, is left to proceed into the cooler.

Once the stationing period in the cooling station 6 has ended, each panel proceeds into a longitudinal lateral profiling station 7 where the longitudinal lateral profiling step 104 of the first panel segment 5 is carried out.

In this step and station the profile of the longitudinal edges with the shape provided for by the production batch is directly obtained along the longitudinal sides.

The profiling is preferably produced through circular toothed blades or circular cutters.

To produce panels with straight edges that have final dimensions of 600 x 600 mm, a median longitudinal cut that produces two 600 mm wide panels is also carried out.

This step requires a proper setup of the station 7, provided with an intermediate longitudinal cutting device.

Once the longitudinal lateral profiling step 104 has ended, the first panel segments 5, sectioned transversally in the on-the-fly cutting station 4, are moved, generally but not limitedly, transversally to their long side, to enter a transverse sectioning cutting station 8, generally comprising a plurality of simultaneous cuts.

In the technical jargon this transverse cutting station 8 is generally indicated as "multiple cutter" that carries out the second sectioning step 105 with a multiple transverse cutting of the first panel segment 5, deriving from the on-the-fly cutting station and already longitudinally profiled in the station 7, into a plurality of second panel segments 10 and subsequent transverse profiling.

The latter profiling operation 106 in this specific case is provided with second panel segments 10 to be profiled with overlapping or interlocking shapes, requiring profiling tools on the transverse edges.

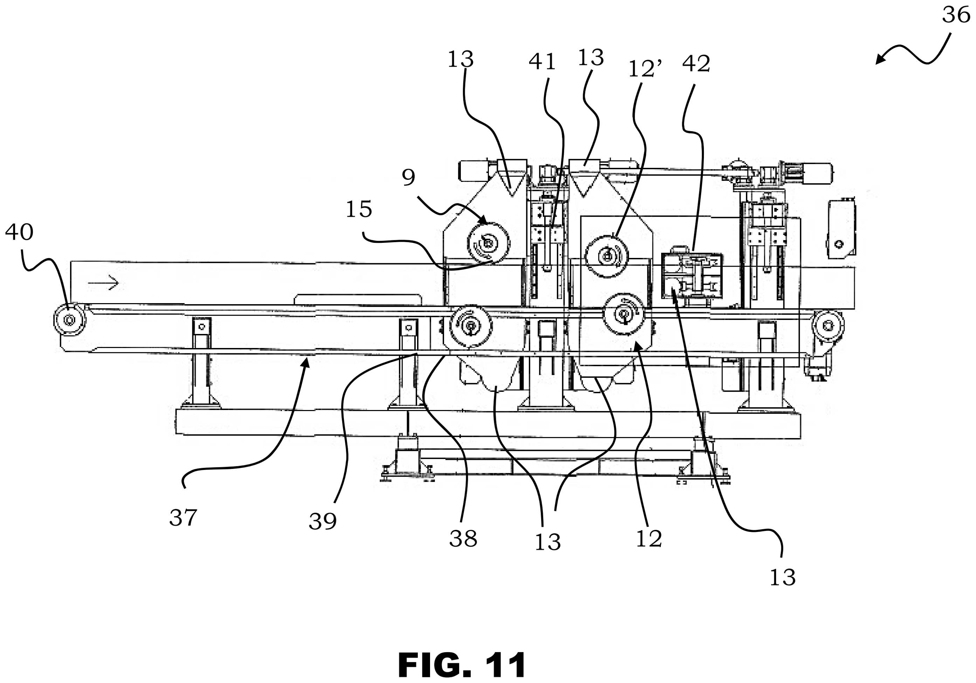

The transverse cutting station 8 and subsequent profiling, if active, generally produce panels in sheets 1200 mm in nominal length with geometrically precise dimensions suitable for joining along the edges, packing and transport, with geometrically precise dimensions suitable for joining along the edges, packing and transport, and with widths derived from the setting of the separation of the cutting blades and transverse profiling, schematically indicated with reference number 41 in Figure 1 and shown more specifically in Figure 11, generally set for widths of 600 mm or 1200 mm in the multiple cutting and subsequent profiling stations, when required, with the final profiles provided by the production batch, or even of 600 x 600 mm, dimensions that usually require straight-edged profiles.

Once the final second panel segments 10 have been made, a packing step 114 thereof follows.

The plant 1 according to the invention provides at least one separate removal and conveying device 11 of a portion, namely of at least one strip of at least one, preferably both the two outer coating layers, at least one separation, removal and collating device 12 with recovery in the form of cut or milled chip of the central layer, generally of foam, so as to obtain a "pure" scrap, i.e. sufficiently uncontaminated by the presence of surface coating to be conveniently reused and, preferably, at least one profiling group 42 comprising at least one suction hood 13.

In a complete plant 1 according to the present invention there are usually four areas or zones where it is possible to produce chips or pure powder, excluding the on-the-fly cutting step where the separation of the two types of chips is a more complex process.

In fact, it is not always convenient at this step to separate the coating layer from the foam chips, since the tracking transverse sectioning requires the application of a device that attaches the saw to the panel and then carries out the tracking sectioning cutting.

According to the invention, a separate removal step 107 is provided, of the cuticles with respect to the foam central part, said separate removal step consists of an incision, lifting or removal, removing and separate collating step 109 of a surface longitudinal strip, or peeling, of a portion of at least one and preferably of both the two outer layers and a separate removal and recovery step 108 of the foam central layer at least in the longitudinal lateral profiling step 104 and/or in the second multiple transverse cutting step 105, squaring and transverse profiling 106 and/or in the pre-calibration step of the edges 102 at the exit of the conveyor, when applicable.

Nothing prevents from providing a different type of removal step 107 with a pre-incision of the single panel strip, or a different removal method from the incision, lifting or removal, removing and collating step 109, all of these variants being comprised in the scope of the appended claims.

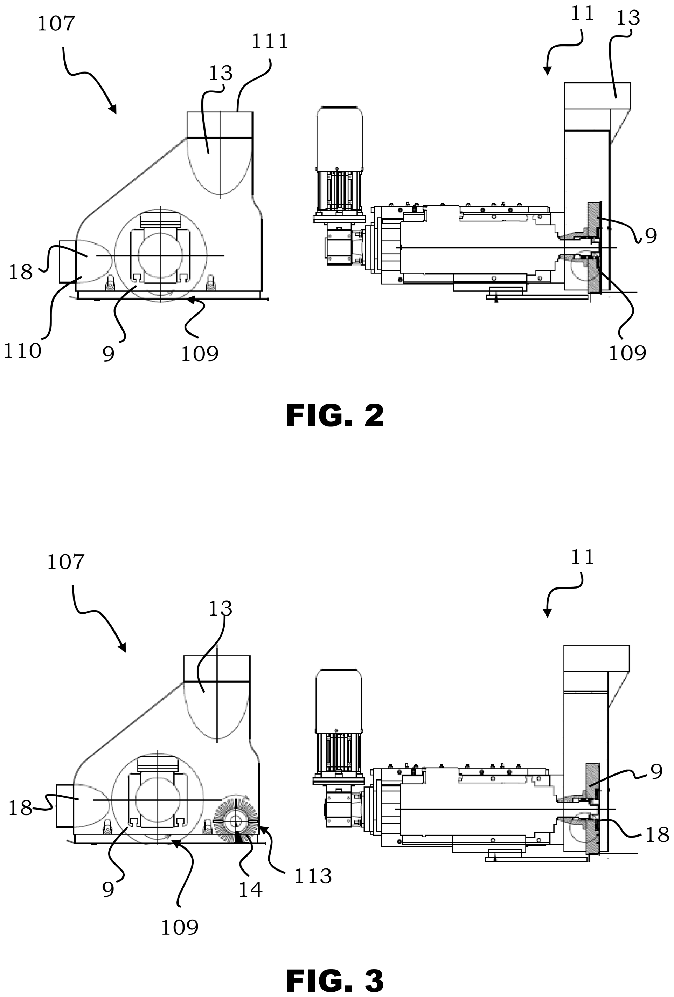

In a first embodiment, as visible in particular in Figures 2-4, in the incision, lifting, or removal, removing and collating step 109 of the coating surface strip at least one tool or cutting tool 9 is used, represented by a rotating blade or cutter provided with suitably shaped teeth.

These teeth, arranged appropriately, only cut and chip a very thin layer of the coating on the surface of the panel and of the underlying foam adhering thereto.

Generally a thickness is provided, i.e. a maximum incision and cutting depth of total removal of 5 mm with the possibility of reaching a depth of up to 8 mm.

The operation provides for using at least one toothed tool for cutting the coating layer and the related removal device placed upstream of at least one second tool that subsequently removes the central layer section of the polyurethane foam.

Still as visible in Figure 2, the suction step 111 follows, with the related suction system 13 of the surface strip reduced into fragments with size depending on the passage of the individual teeth or less.

The suction system provides a vacuum generator, for instance a fan located downstream of a suction hood with related collating duct toward a container or collection silo that is usually provided with filters or other systems to hold the chips and separate them from the air expelled from the fan.

The teeth of the tool must have a shape suitable for producing a burr-free cut of the coating.

The sharp profile of the teeth is, for instance, a succession of tooth profiles, wherein a tooth or two subsequent teeth incise the edge of the coating strip to be removed, whereas one or two subsequent teeth incise and remove the central part of said strip, this is to allow profiles of the incision cutting edge and angles of incidence that make a clean cut on the edges of the strip to be removed.

The profiles of the incision teeth preferably have a rectangular and/or isosceles trapezoidal section of the central removal teeth.

Burr-free cutting is the result of the combination of the orientation angles of the teeth, the arrangement of these teeth in succession and the rotation speed.

Instead, the rotation direction of the tool with respect to the forward direction of the panel is important for an effective separation of the chips.

A brushing system with a rotating brush 14 placed downstream of the toothed tool is also provided, which carries out the removal of the surface strip, in order to ensure the cleaning of chip residues from the incised surface and conveying toward the suction system.

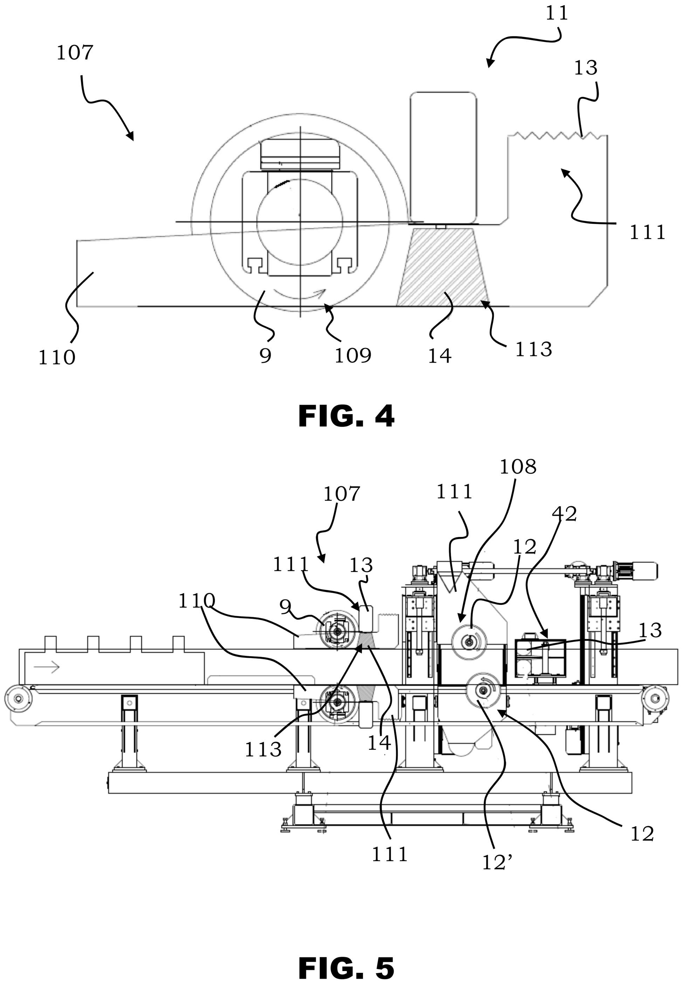

The rotating brush 14 may have an axis parallel to that of the cutting tool, as visible in Figure 3, or an axis perpendicular to that of the incision tool, as visible in Figure 4, based on the conveying direction of the chip.

In Figure 4 it is possible to appreciate the step 109 carried out by means of the separate removal and conveying device 11 comprising at least one cutting tool 9 for separating and removing the surface strip and the recovery step carried out by means of brush 14 and suction hood 13.

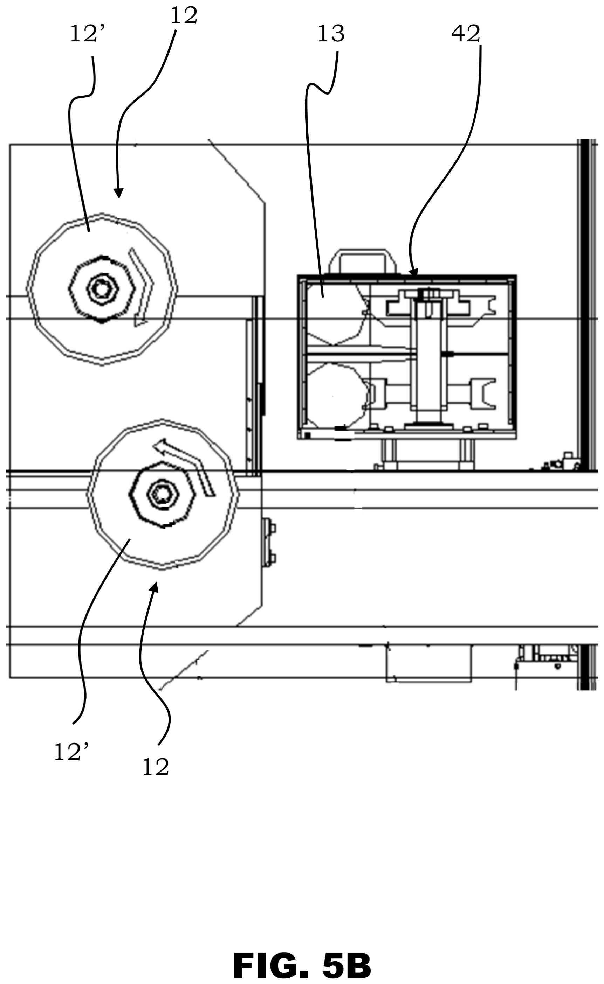

Figure 5 represents the equipment for step 109 carried out by means of the separate removal and conveying device 11 comprising the at least one cutting tool 9 for the separation and removal shown in Figure 4 ant the cutting and recovery step of the part removed from the layer inside the panel carried out by the separation, removal and collating device 12 and a profiling group 42.

In Figure 5B it is possible to appreciate a detail of the separation, removal and collating device 12 comprising double cutters 12', including one pair with horizontal axis and one cutter with vertical axis 42 with interchangeable tools depending on the thickness of the panel and the profile to be obtained, where the examples shown feature an interlocking male joint shaping also equipped with two horizontal channels.

The chip and/or powder produced and separated may be conveniently reused directly as material replacement in the production process for mechanical recycling, after refining it to the desired grain size if necessary, reintroducing the ground product into the liquid resins as a dispersed solid component, or it may be conveniently sent to a chemical recycling plant.

The method 100 according to the invention provides, as mentioned, that the removal step 107 of the outer layers, or cuticles or films, is separate from that of the foam central part, or core, and comprises at least one incision, lifting, or removal, removing and collating step 109 of at least one of the longitudinal strips on opposite surfaces comprising the outer surface coating layers, thus generating a surface groove for the separate cutting and removal at said surface groove.

In other words, removal of a strip or film from the panel coating is provided also comprising a very thin layer of the underlying polyurethane that adheres thereto before proceeding with finishing to size and/or shaping of the edges by means of rotating tools and then with collating the polyurethane foam underneath the area or strip whose film is removed.

Therefore, the method 1 according to the invention provides removing and separately collecting the scraps or waste parts resulting from the removal of longitudinal strips of the outer coating layers and comprising a small thickness adhering thereto of the foam central layer, separating them from the scraps only containing foam residues, generally of polyurethane.

It is therefore provided to remove this strip in the longitudinal direction with respect to the cutting and/or coating profiling operations for a reduced thickness, by removing it from the surfaces of the panel and specifically and separately collecting the removed surface strip or band.

Collating preferably provides an outputting step of an air flow 110 grazing the layers to be removed at the at least one and preferably both two strips on the opposite surfaces and a separate removal step, for instance by suction 111 or by winding of at least one of said strips.

Further to this specific operation, it is possible to proceed cutting, or milling, and removing the corresponding internal longitudinal section, separate removal and recovery step 108, composed of only the remaining thickness of the edge of the panel foam and collecting, still by separate suction, the chips produced.

Since the panel is provided with two upper and lower coating substrates, the method involves removing and separating at least one cuticle and preferably both the upper and lower cuticles.

The cutting and shaping steps, similar to the prior art solutions, can be carried out by means of traditional tools and methods, i.e. through toothed disc circular blades and/or toothed cutters.

The chipped foam obtained after removing the outer layers is almost free of coating residues, residues that are polluting for recycling and reuse processes, whereas the uncontaminated foam can be conveniently recycled as powder that can be reintroduced into the polyol or for chemical conversion.

Still as visible in Figures 5 and 5B, a second group of cutting and/or profiling tools, which in this case constitute the separation, removal and collating device 12, is preferably positioned in the same working area, downstream of the device which only removes the surface strip and in the movement direction of the single panel.

In a second embodiment, in the incision, lifting, or removal, removing and collating step 109 of the at least one surface strip the separate removal and conveying device 11 comprises at least one group di tools comprising a pre-incision group 23 for instance provided with a circular thin blade and subsequently at least one cutting tool 9, so as to first cut the outer layer and then a thin first foam thickness adhering thereto with a cut that is parallel to the coating surface.

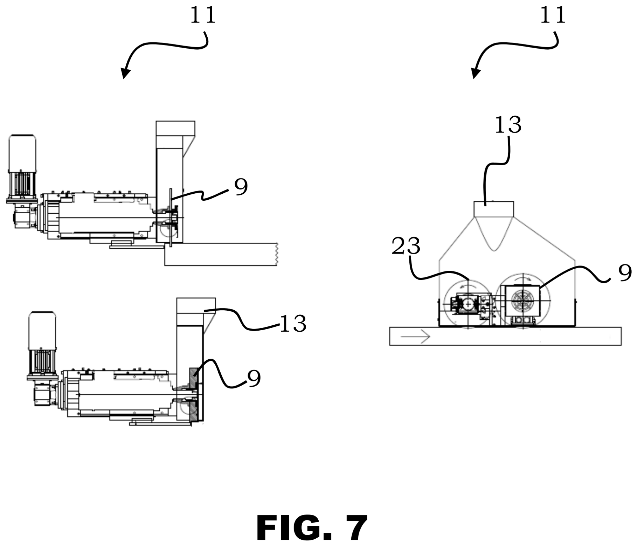

As shown with exemplifying and non-limiting embodiments in Figures 7-16-17, it is possible to provide for the pre-incision group 23 and/or cutting tool 9, 9', a motorised rotating tool with a circular blade provided with a cutting profile with appropriate sharpening to successively incise a very thin layer of the outer coating layer 15 and, as mentioned, even a thin first foam thickness adhering thereto, usually, but not limitedly, with a depth of 5 mm and which can extend up to 8 mm, and then the removal of the strip 16 incised through a further tool follows.

In case a cutting tool 9 with a toothed blade pre-incision group 23 is used, counter-rotating toothed tools are to be used.

In the alternative case of using a cutting tool 9' with a smooth blade pre-incision group 23, a ploughshare tool is to be used to lift the cut strip.

For the pre-incision group 23 and/or the cutting tool 9, 9', to make the incision it is possible to provide for a single blade if the coating outer layer 15 to be removed from a band 16 on the edge of the panel needs to be incised, or a double blade, i.e. with two parallel blades spaced apart on the same rotation shaft, or two single blades in sequence can be used if they must incise a coating strip 16 inside the panel to be cut.

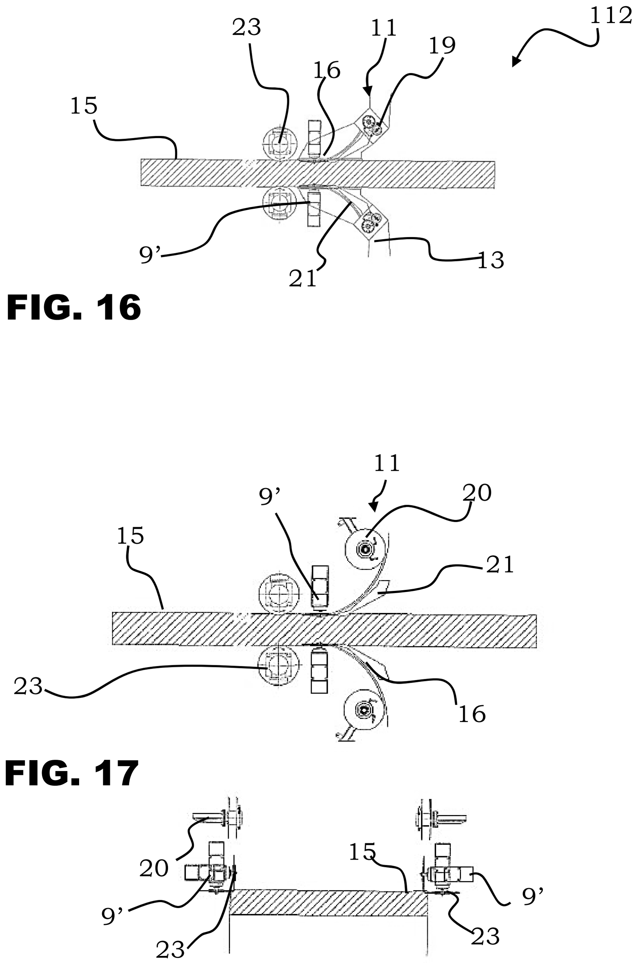

With reference to Figures 16, 17, the separate removal and conveying device 11 may be provided, with a motorised rotating cutting tool 9' with an axis perpendicular to the surface of the panel, which performs an incision of the foam underneath the band to be removed up to the intersection depth with the incision previously performed on the surface of the outer coating layer 15 and the motorised rotating cutting tool 9' for this removal operation may be a toothed blade, for instance in the embodiment shown in Figure 16, or a smooth blade, for instance in the embodiment shown in Figure 17, with the rotation axis of the rotating blade perpendicular to the surfaces of the panel.

In the case shown in Figure 16, the cutting tool 9' separates the strip to be removed from the foam of the core of the underlying panel, lifts the strip, or film or cuticle, cut by means of a ploughshare tool and, at the inlet of the suction hood 13, it conveys it toward a shredding system 19, composed in this case of a cutter, cuts the strip 16 into multiple fractions suitable to be sucked.

Alternatively, in the case shown in Figure 17, which shows a side view and a sectional view, the strip may be collated for winding around the winder 20, constituted by a collector cylinder placed above the surface of the panel.

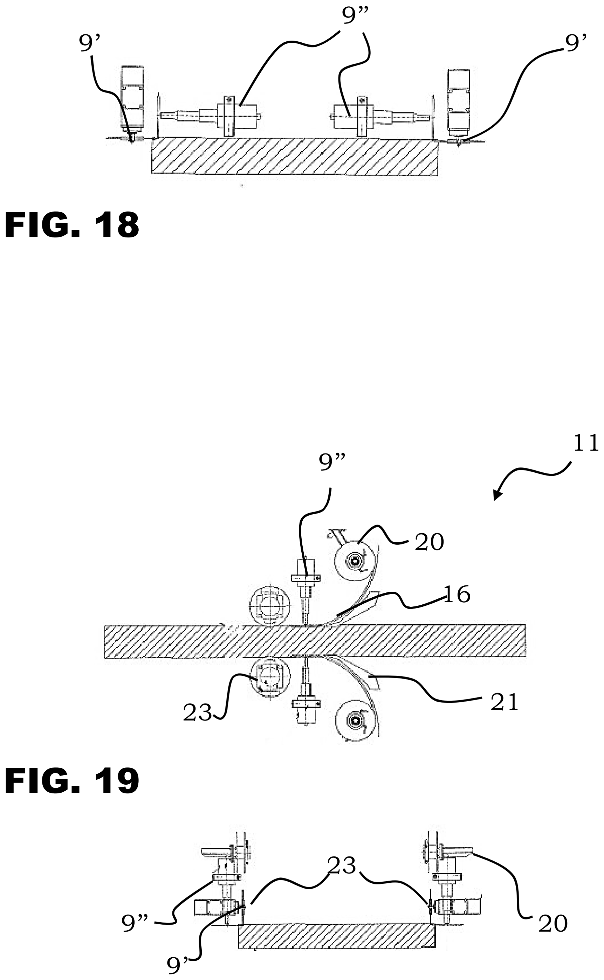

In a third embodiment of the separate removal and conveying device 11, shown in Figure 18, in the incision, lifting, or removal, removing and collating step 109 a separate removal and conveying device 11 is used, comprising an incision tool of the coating layer 15, i.e. a cutting tool 9", represented by an ultrasonic incision element, set in vibration by an ultrasonic frequency vibration application system, which incises the underlying first foam thickness that is parallel to the surface, in this case constituted by a smooth blade rotating tool equipped with a sharp cutting edge.

Indeed, to prevent the rotating blade wire from "snagging" during cutting, i.e. the formation of a conglomerate of material adhering to the blade that can cause tearing instead of a clean cut, it is possible to apply cutting tools 9" characterized by rotating blades energised by ultrasonic vibrations. The mechanical high-frequency vibration of the blade keeps it free from clumps adhering to the blade edge, making a much more reliable, safe and precise cutting.

Said cutting tool 9" constituted by a vibrating ultrasonic incision element performs a cut that incises a very thin layer of the coating and of foam adhering thereto, still generally with a 5 mm depth and that may extend up to 8 mm and it is provided that the smooth vibrating blade may also be single in this case if it has to incise the coating to be removed from a band on the edge of the panel, or double, i.e. with two single blades parallel and spaced apart on the same rotation shaft, or there may be two single blades in sequence if they have to incise a coating strip inside the panel to be sectioned.

Moreover, still as shown in Figure 18, in this third embodiment, it is possible to couple the cutting tool 9" with the cutting tool 9, 9', which, as mentioned, consists of a motorised rotating tool with a rotation axis perpendicular to the surfaces of the panel, which performs an incision of the foam underneath the band to be removed up to the intersection depth with the incision previously performed on the coating surface.

In a further version of the separate removal and conveying device 11, shown in Figure 19, the cutting and removal apparatus of the coating strip may be constituted by the pre-incision group 23, whether it has a smooth blade or a rotating toothed blade, or by a cutting tool 9, 9', coupled to the cutting tool 9" of the underlying first foam thickness that is parallel to the surface, as mentioned constituted by a sharp rotating tool energised with an ultrasonic vibration, in this exemplifying case with a smooth blade, tool that is provided with a cutting profile that allows the blade not to form adherent agglomerates and that, with the incision, separates the strip to be removed from the foam of the central layer of the underlying panel.

The film or cuticle thus separated, even in this case, may be lifted through a ploughshare tool 21 and removed for winding around a winder 20, constituted by a collector cylinder placed over the surface of the panel or by means of the shredding system 19 constituted by a cutter that cuts the strip into multiple fractions suitable to be sucked.

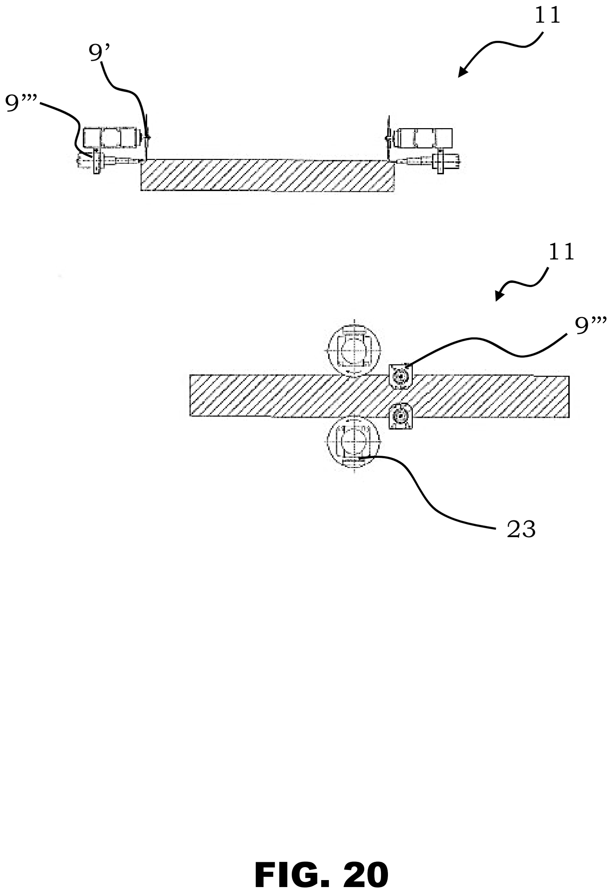

In a further variant of the separate removal and conveying device 11 for the incision, lifting, or removal, removing and collating step 109, shown in Figure 20, pre-incision groups 23 are used, which may be constituted by cutting tools 9 with toothed circular incision blades or 9' with motorised smooth circular blades with continuous cutting edge that performs an incision in the coating layer, penetrating a few millimetres. For the underlying foam, a subsequent cutting tool 9" is provided, which is constituted by a parallel incision device to the surface to be removed and subsequently, a further device is provided to lift and remove the strip material of the coating.

The cutting tool 9‴ may be composed of a blade or a shaped sharp chisel or a blade or an ultrasonic frequency vibrating cutting edge chisel.

In any case, for any exemplifying embodiment above described, it is possible to select the best suited cutting tool 9, 9', 9", 9‴ or pre-incision group 23 to the specific needs, all combinations being comprised in the scope of the appended claims.

The lifting may be carried out through a cutting edge tool that lifts coating chips ranging in length from a few millimetres, generally more than 3 mm, to a few metres.

This type of cutting produces a much longer chip than the toothed blades.

Depending on the type of coating, this chip may be fragile and therefore breaks when bent during lifting, or it may be flexible and resistant.

For collating the broken chip when produced by the blades described above, a brushing device 14, as mentioned, is preferably provided, with fixed or rotating brushes, which facilitates and integrates the operation of the suction hood 13, containing the at least one specific cutting tool 9, 9', 9", 9"'.

The chip, which is essentially strip-like but fragile, is directed toward the suction hood 13, and, as seen, a shredding system 19 may be provided, which can also be defined simply as a chipper constituted by a roller cutter provided with blades, positioned appropriately along the suction hood 13, to shred 112 the two mirror-image strips and convey the shredded residues to a suction silo.

If the chip is continuous and resistant, it is provided to wind it onto a winder, a function that ensures complete separation of the coating from the pure foam.

For the suction step 111, in the plant 1 according to the present invention, at least one suction hood 13 is adopted on both opposite outer layers.

For the hood, preferably, a suction flow plane is defined by the centre line of the projection of its suction section close to or in contact with the panel surface and by the centre line of the connection of the duct that connects it to the suction. This plane may be parallel to the forward direction of the panel or inclined by +/- 15°.

Furthermore, in order to facilitate the suction step 111, close to suction hood 13, on at least one of the opposite outer coating surfaces a brushing step 113 is further implemented by means of a fixed or motorized rotating brushing device 14 which, in the case of cutting tools 9, 9' with a rotating circular blade, may have a rotation axis parallel or normal to the panel surface.

In the case of removal of surface strips removed by means of a cutting tool 9 constituted by a toothed rotating tool, it is necessary for the chips contaminated by the residues of the coating layer, which are fragmented into fine, light particles, to be removed by means of each suction hood 13, which can be almost in contact with the coating layer surface or can crawl leaning on the layer by means of an elastic support.

The suction hood 13 has a reduced internal volume and is shaped around the tool to promote the efficiency of the suction flow.

Moreover, the suction hood 13 may be provided with an inlet channel opposite the chip projection direction and a suction channel, opposite and preferably positioned in the chip projection direction.

For reasons of space, the suction channel may be tilted with respect to the cutting forward direction by 90° +/- 45° and provided with the at least one fixed or rotating brushing device 14 that pushes the chip toward the suction hood 13.

The suction hood 13, which completely encloses and contains the cutting tool or tools 9, 9', 9", 9"', is shaped around it or them and has a mechanically movable surface to adapt to the surface of the panel and remain grazing the surface or in contact with it.

The suction hood 13 is provided with one or more suction inlets positioned in the chip projection direction and also with one or more suction air inlet ports located on the side opposite the suction side.

The base of the suction hood 13 may be provided with a frame that can be movable in the direction of the panel surface, which is positioned grazing said surface in order to create a suction condition between an air inlet and an air outlet.

The grazing frame may be provided with curved flaps at the inlet and outlet to prevent snagging on the panel surface.

Moreover, the frame may be coated with non-stick material, for example Teflon or non-stick ceramics.

Furthermore, still to facilitate the suction step 111 and ensure cleaning at the coating strips of the central layer, an outletting step of an air flow 110 grazing the strip to be removed is provided at the at least two strips, and is achieved by means of a blower nozzle located in an air inlet 18 positioned on the front of the at least one cutting tool 9, 9', 9", 9"', in the case of a rotating blade in the rotation plane of the blade in the part where the blade penetrates the layer to be cut.

The suction inlet of the suction hood 13 is preferably positioned in the position where the chip is projected.

This forced suction air circulation system creates the conditions for removing almost all of the chips produced, which contains all of the coating layer chips and a small percentage of foam.

Additionally, to prevent electrostatic adhesion of the chip, it is furthermore, but not necessarily possible to apply an ionising field to the air flow entering from an inlet by means of suitable commonly used ionisers.

Depending on the position where it is possible, for reasons of space, to place the suction hood inlet, it is possible to direct the chip projection.

Exemplifying and non-limiting alternatives of incision and removal and subsequent suction groups before obtaining the cutting of the central layer, constituted by the sole foam, are schematically shown in Figures 2-4 and 7 and 16-20.

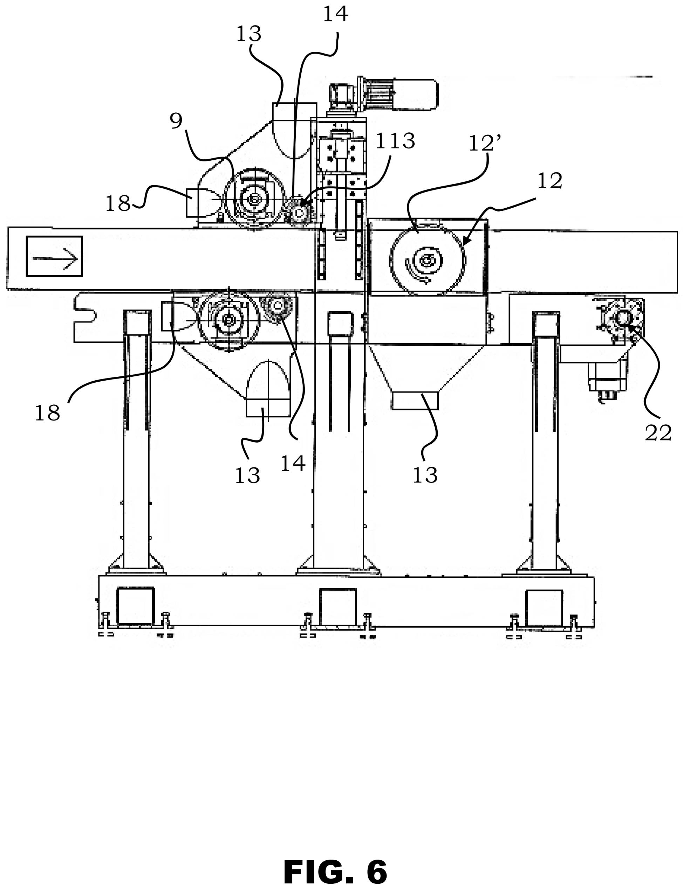

In the preliminary edge longitudinal trimming step 102, a longitudinal trimming machine is generally used, shown schematically in Figure 6, and configured in a first area 2, located in an advanced position with respect to the movement of the panel, to remove and collect the portion of the upper and lower coating layers having a width ranging from 0 to 15 mm and a depth from 3 to 8 mm.

A subsequent operation placed further downstream removes and collects the chips made of internal polyurethane foam that is free from coating residues coating residues.

Still referring to Figure 6, the machine dedicated to this process consists of a lower transport group automatically operated by two toothed belts, whose just the motorisation group 22 is shown, two groups for incise and removing the surface layers provided with at least one cutting tool 9, 9', 9", 9"', and the suction hood 13 and possibly the brushing device 14 for each side of the outletting continuous panel, provided with a vertical axis and a horizontal transverse axis for adjusting the cutting position. The separation, removal and collating device 12, located in a downstream section distinct from the incision group, cuts and removes the pure foam for each side.

The configuration of the removal group of the coating strips may be either the one shown in Figures 2-4 or 7 or 16-20.

Removal of the coating strips is carried out by two devices placed on the right-hand side and two on the left-hand side of the machine, which can be set in position at the edge of the panel as it exits from the double-belt conveyor and at the height required to suit the thickness.

The pre-calibration width always exceeds the final width to be obtained after cooling and the related dimensional consolidation of the panel.

In a first exemplifying embodiment, the upper toothed tools are rotating, and they rotate in the same direction as the movement direction of the panel, thus creating a clean cut in the sole incision areas.

It is also possible to use a system that allows for a better definition of the edge cut of the upper and lower surface coatings, which is even more efficient, although more complex and therefore more expensive, which additionally provides for a further pre-incision group provided with a circular thin blade, as schematically shown in Figure 7, and a subsequent cutting tool 9, 9', 9", 9"', shown in the various embodiments in Figures 16-20, also known as chip removal group, wherein the two blades are counter-rotating to project the chips both in the direction of a suction hood located in the projection direction of the chips.

Pre-calibration removal may preferably be carried out through conventional circular blades with teeth that remove the coating layer and a few millimetre thickness of the underlying foam.

The part cut upon the passage of each single tooth produces small chips that are projected in the rotation direction of the blade outside the panel surface.

These blades must have a cutting width sufficient to remove the width of the coating layer band up to the irregular edge of the raw panel.

When using toothed circular blades, it is very important, for the peeling operation, that the chips are removed by the suction hood 13, which is preferably "wrapping" and has an extension on the side of the panel to maintain efficient suction.

In this configuration, a suction inlet also engages the side part of the suction hood 13.

Within the suction hood 13 generally the brushing device 14 for cleaning the surface is comprised.

In the pre-calibration process, i.e. preliminary longitudinal profiling through circular incision blades having a smooth cutting profile that perform an incision in the coating layer, penetrating a few millimetres into the underlying foam, an upper rotating incision blade and a lower rotating blade are provided and, subsequently, the passage of the blade which produces, as visible in Figure 7, the removal of the entire surface layer.

In this case, however, the suction inlet of the suction hood 13 is placed in a position in which the gravity facilitates the action thereof, for instance below, and the suction mouth may be positioned at a defined angle between the rotation axis of the circular blade and the axis of the suction mouth, from 90 to 60 degrees with respect to the lower surface of the panel.

Similarly, the vibrating blade and circular blade devices described above may be arranged.

From the longitudinal section it can be seen that the tools for removing the covering strips are equipped with a hood of sufficient extension to capture the dust having a horizontal direction and in accordance with the forward direction of the panel.

The hoods of the incision elements are designed to ensure that the air flow entering the hood is able to capture the chips, which are mainly composed of substrate.

Once the incision, lifting, or removal, removing and collating step 109 and the suction step 111 have been performed, a separation, removal and collating device 12 constituted by a circular blade or a lateral cutter (not shown) only removes the polyurethane foam, thus producing fine chips free of coating residues.

The cutting and milling operations and the suction devices associated with this lateral finishing operation are well known.

It is important for this operation to be performed separately from the incision, lifting, or removal, removing and collating step 109 and the associated suction step 111.

Following this step 102, as already described, the panel is cut transversally into segments of multiple lengths of the final length and sent for cooling.

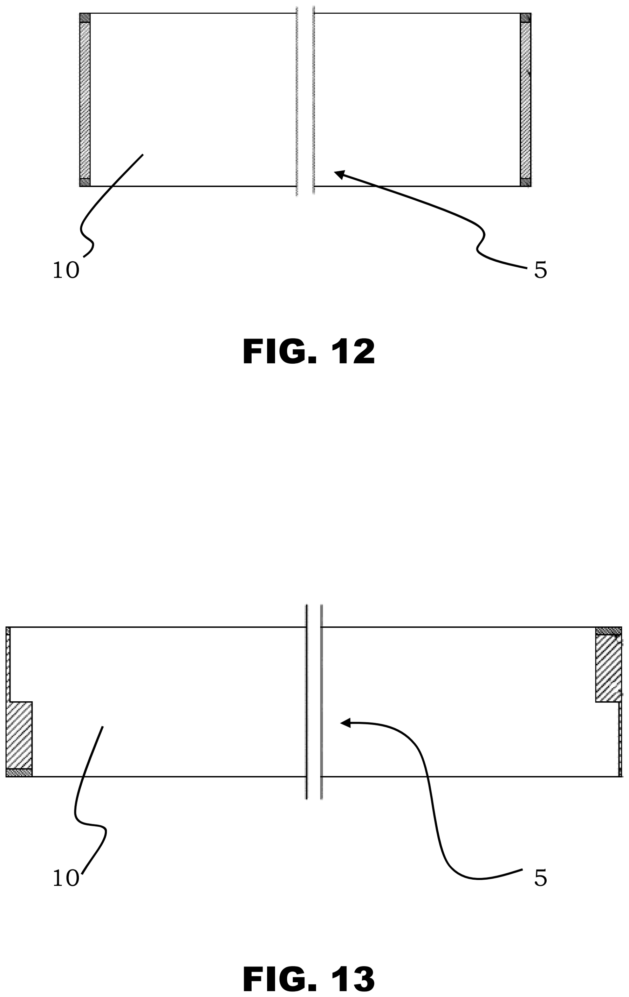

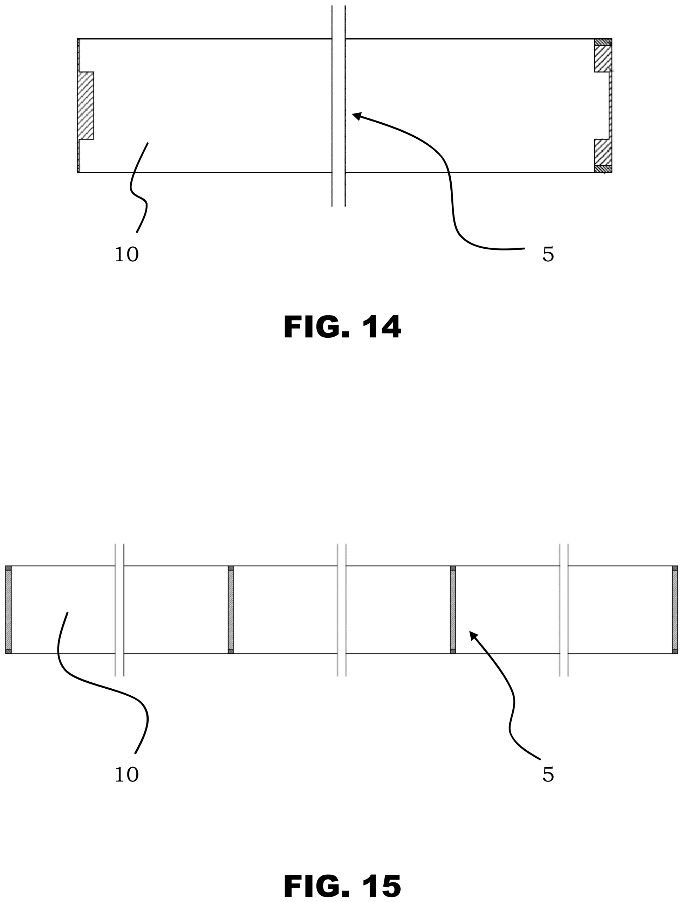

In the subsequent longitudinal lateral profiling step 104, straight-edged profiles are generally produced, as schematically shown in Figure 12, with a width of 1200 mm or 600 mm, or male-female interlocking profiles, as shown in Figure 14 below, i.e. female with two males arranged on two of the sides orthogonal to each other and with coated surfaces and two females arranged on the remaining orthogonal sides, or overlapping profiles, also with an L-shaped profile, as shown in Figure 13 below.

Figure 7 shows a coating strip removal system where, for reasons of space, the suction hood 13 has a very tilted suction inlet (greater than 60°) with respect to the chip projection direction, which is almost tangent to the surface to be removed.

In this case, it is useful to apply two counter-rotating toothed blades, wherein a toothed blade carries out a first incision step of a first internal section, and a second blade completes the removal with the projection direction toward each other, so that they project the chip toward the suction hood 13.

In the preferred embodiment of the plant 1, the incision, lifting, or removal, removing and collating step 109 and the suction step 111 are carried out before the incision and full-thickness removal step, from which pure, reusable foam chips are obtained, both in the preliminary longitudinal profiling step 102, in the longitudinal lateral profiling step 104, in the second cutting step 105 and in the second multiple transverse profiling step 106.

As mentioned, given the complexity, this operation is avoided for the "on-the-fly cutting", although nothing prevents this solution from being implemented in further developments.

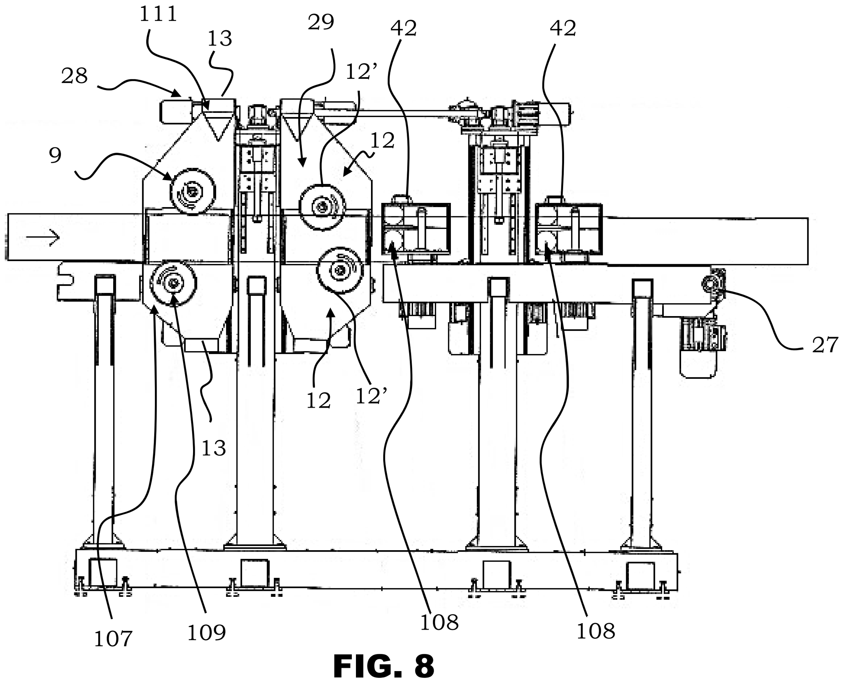

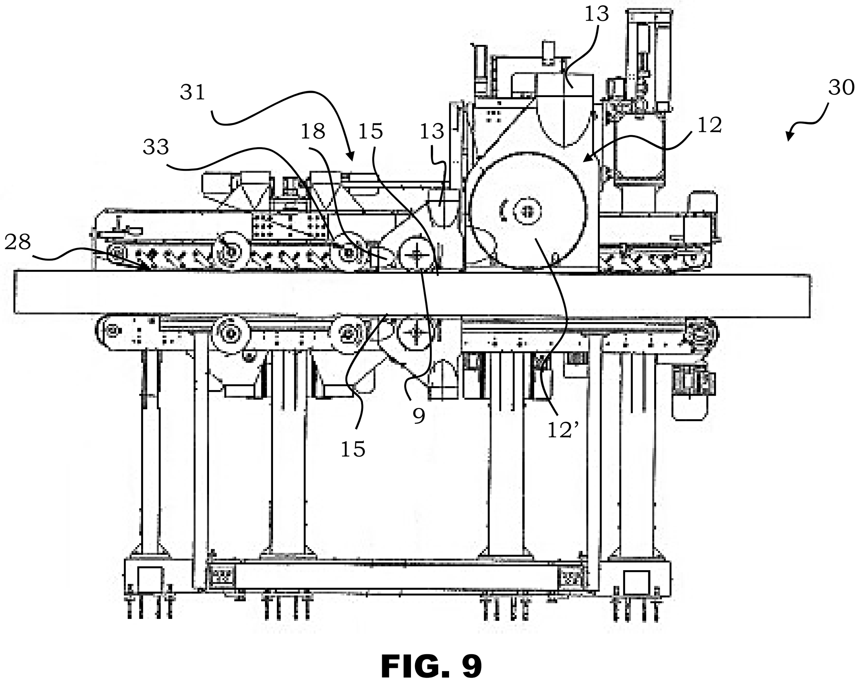

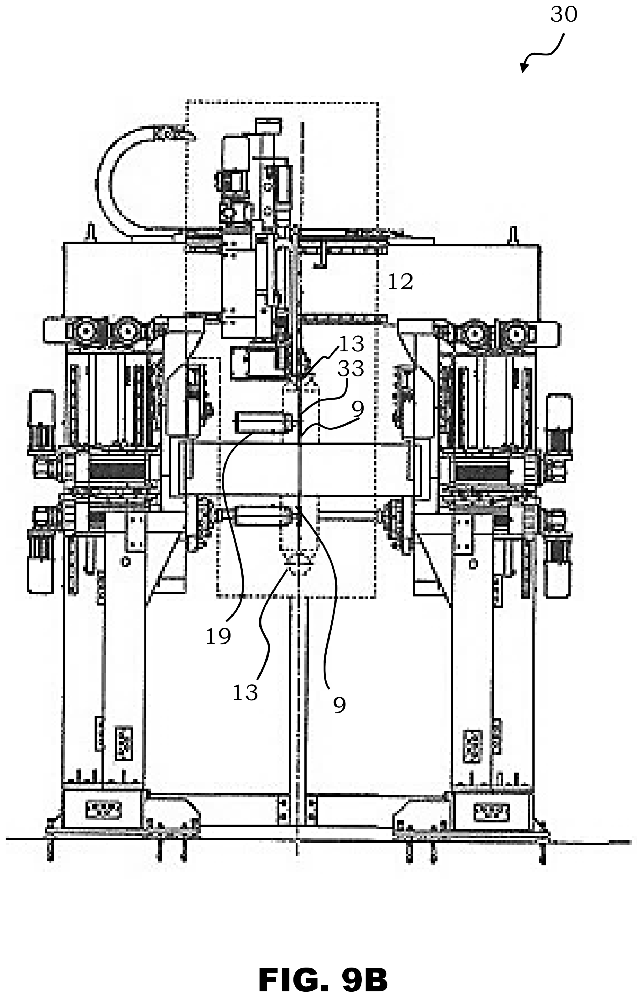

As visible in Figures 8, 9, 9B, the machine dedicated to this longitudinal shaping step comprises a series of tools that allow these three types of profiles to be made, preferably by automatic or semi-automatic presetting.

The configuration allows the coating part to be removed and collected separately from the chips of the part of the internal foam thickness, which is therefore almost completely free of coating.

The main dimensions relating to the longitudinal profiling are the removal thickness of the coating layer 15, up to 15 mm, the removal width of the coating layer usually up to 3 mm but extendable up to 15 mm and various dimensions in length.

The removal width limit of the surface strips generally corresponds to the nominal width section of the internal profile plus or minus the tolerance limits of the removal processes and the cutting precision of the surface coatings which, when added together, are plus or minus 2 mm.

More specifically, Figure 8 shows a longitudinal side view of the longitudinal profiling station, whereas Figure 9 shows a view of the longitudinal central section of the longitudinal profiling station and Figure 9B shows the transverse section of the longitudinal profiling station.

Still referring to Figures 8, 9, 9B, the machine dedicated to the longitudinal lateral profiling step 104 provides for longitudinal transport carried out by means of two rubberised toothed belts 27, two upper drive pressure groups 28 with automatically adjustable vertical position, two coating strip removal groups provided with at least the surface layer incision and removal tool 15 with the suction hood 13 for each longitudinal side of the panel, provided with a vertical positioning axis and a horizontal axis that is normal to the longitudinal axis of the panel and preferably provided with counter-rotating brushing devices 14 (not shown), two chipping groups, which constitute the separation, removal and collating device 12, for trimming the foam of the thickness of the central layer of the panel, still for each side and each provided with a vertical positioning axis, and two profiling groups 42 for the separate removal and recovery step 108, each equipped with a vertical and horizontal positioning axis and a series of suction hoods 13 in step 108 with a support that can be positioned independently of the tools, sized and shaped to receive, as projection direction, the respective chips and to separately suck the contaminated dust from the pure one.

For making straight-edge profiles, this step involves the longitudinal removal of the upper and lower outer layers, which is generally adjusted to a depth of up to 5 mm or up to a maximum of 10 mm, whereas the side strip width to be removed can reach 6 mm per side, or up to a maximum of 15 mm.

Figure 9 more specifically shows a sectional view of a longitudinal lateral profiling device 30 provided with longitudinal central cutting devices of the panel for making panels of a width having a dimension that is different from the standard, comprising a device for the removal, removing and separate collating 31 of the coating, comprising, for instance, the cutting tool 9 and the air inlet 18, and the separation, removal and collating device 12 of the foam central layer provided in the plant according to the invention, made with a single circular blade.

It furthermore shows a different drive device of the panel and the lateral profiling and collating groups of the foam intermediate layer provided in the plant according to the invention.

Figure 9B specifically shows a transverse sectional schematic view of the same apparatus 30 for removal, removing and separate collating, wherein two central circular blades positioned longitudinally offset for incising and removing the surface coating layer of the panel are also visible, for carrying out, when required, a longitudinal dimension reduced to half, i.e. 600 mm.

As visible in Figure 9B, in the case of panels with a longitudinal width of 600 mm, two smooth-bladed incision elements 33 are also preferably introduced to precisely incise the two edges of the thin strips of surface layers, one upper and one lower, to be removed centrally in succession by means, for instance, of the toothed cutting tool 9 and the related suction hood 13.

Subsequently, in the feeding direction of the panel, the separation, removal and collating device 12 is inserted, consisting of upper and, if necessary, lower circular blades that only cut the foam, thus generating pure powder.

The blades may be toothed or non-toothed, in which case they consist of two parallel rotating blades.

The blades positioned in the centre of the panel width preliminary cut and remove the substrate, so that each blade only produces pure dust.

In this case as well, in the case of toothed blades, a counter-rotating brushing device (not shown) may be provided inside the suction hood 13 of the two upper and lower incision elements.

For making longitudinal overlapping profiles, shown schematically in Figure 13, it is possible to make the panel edge with a step that allows the edges of two adjacent panels to overlap. This overlap can be done both longitudinally and transversely.

This type of profile generally, but not exclusively, has a width less than or equal to 20 mm and a depth equal to half the thickness, with a certain tolerance.

To make these overlapping profiles, the surface strip removal devices remove a few millimetres of thickness (up to 8 mm) of the coating, but for a width equal to the one required to carry out the removal necessary to achieve the depth of the overlap step with the necessary tolerances.

The chipping tool that removes the central foam also covers the same cutting width.

The apparatus that carries out said profile longitudinally on both sides of the panel is shown schematically in Figure 8, or in detail in Figure 5B.

The apparatuses that remove the coating band may be positioned vertically, provided with toothed blades with diameters corresponding to the section to be removed, or they may also have multiple axes and be offset in their vertical section. Figure 5B schematically shows blades for profile and interlocking.

The groups that carry the tools, of the types described above, are automatically brought close to the surface of the panel and their rotation direction is in the same forward direction as the panel.

The suction hoods 13 are independent and automatically heightadjustable, so as to skim the surface and also carry out the lateral containment of the chips that are produced.

They can also be provided with an air flow inlet to facilitate the removal according to a conveyed air flow.

The groups that carry the tools that remove the internal section are positioned downstream of the movement direction of the panel, have configurations already in use and operate with chip collating and separation methods, collecting and conveying it separately from the tools that remove the surface layers.

For making male-female interlocking profiles, shown schematically in Figure 14, the use of the exemplifying, but not limiting, equipment shown in Figure 8 is provided.

Therefore, for instance, the cutting tool 9 is provided, but nothing prevents the use of the different cutting tools 9', 9", 9‴ described, for the removal of surface strips, in this case comprising cutting groups comprising incision/removal tools positioned so as to remove a coating layer width equal to the protrusion of the male profile and chip-forming tools that shape the profile for carrying out the rough and protruding male, followed, if necessary, by profiling tools that finish the male.

Similarly, profilers are provided to obtain the female profile on the opposite side.

The direction of the air flows mixed with dust associated with the rotation of the tools allows for the suction and separate collating of the pure dust produced by the chippers or profilers positioned separately from the incision elements.

Each group of tools is provided with its own suction hood with electronic adjustment of the vertical position of the bulkheads.

The apparatus for removing the lower and upper coating strips on both sides is the same as the one described above.

The separation, removal and collating device, represented in this case by downstream shaping groups, provides for the automatic positioning in height of the tools for the removal and shaping of the male and female interlocking profiles which only remove the internal foam, therefore free from the contaminants deriving from the removal of the coverings.

The removal and completion action of the male and female profiles is generally carried out through vertical axis rotating cutters 42, particularly visible in Figure 8.

As mentioned, once the longitudinal lateral profiling step 104 has ended, the first panel segments 5 are moved to the transverse multiple cutting station.

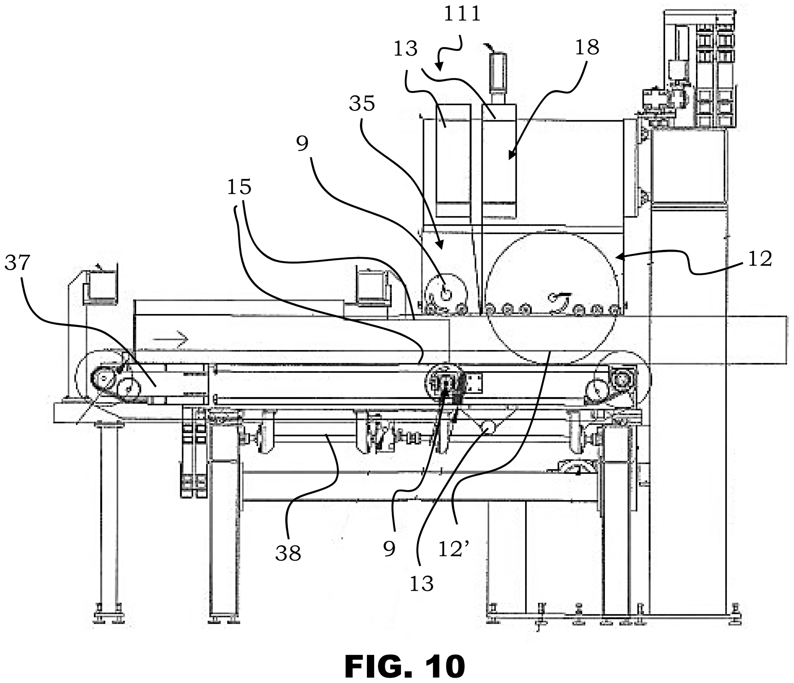

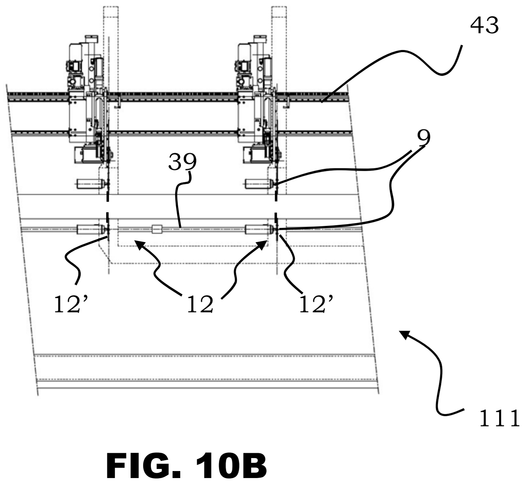

Figure 10 shows a side schematic view of a multiple cutting station 35 for insulating panels starting from a first insulating panel segment into a plurality of second insulating panel segments comprising, for instance, the cutting tool 9, comprising in this case removal and collating devices of two strips of the coatings of the two upper and lower surfaces upstream of the cutting and transverse separation section of the second segments according to the invention.

Figure 10B shows a schematic view of a detail of the apparatus 35 of Figure 10, where the cross-sections are shown with a view of the at least one cutting tool 9 with the cutting and severing blades of the upper and lower covering strips that can be positioned to adapt to the cutting of high thickness panels supported by upper and lower guides 43 for their transverse positioning to size.

In this station, the second cutting step 105 of the first panel segment 5 is carried out into a plurality of second panel segments 10, followed by the transverse profiling step 106 with transverse squaring machines, for the profiling of overlapping or interlocking panels.

As an example, the first panel segment 5 may be considered, which is six metres long plus excess, divided into five parts 1.2 metres long.

The transverse cut is generally, but not exclusively, carried out by at least four groups to carry out incision, lifting, or removal, removing and collating step 109 and suction step 111, which can be positioned longitudinally to remove a section width of 3 mm to 8 mm, preferably of 5 mm.

A multi-blade cutting machine is composed of a certain number of identical cutting tools 9, 9', 9" fixed on the same supporting structure consisting of an upper section and a lower section, as shown in the section of Figure 10B.

All cutting units are adjustable in mutual distance to preset the cutting tools 9, 9', 9", for instance cutting discs, at the desired distance to obtain the finished or rough size of the final panel and in height to adapt to the thickness of the panel.

Each multi-blade operating unit comprises the cutting tools group 9, 9', 9", which separates the longitudinally processed panel into shorter modular sections.

The removal and collating group is installed on a frame 37 that carries all of the cutting stations and the feeding belts of the panels to the group of cutting tools 9, 9', 9".

Each group of cutting tools 9, 9', 9" generally, but not limitedly, comprises panel lowering and centring devices, essentially hoppers, a belt or chain transport group to the cutting section, and upper and lower surface incision groups provided with specific and separate suction hoods.

The upper incision group is provided with an automatic vertical positioning system to adapt to the panel thickness with the respective suction hood.

Each lower incision device is mounted on guide structures 38 connected to the frame 37 and is controlled by a bar 39 that allows it to slide automatically in alignment with the upper incision element.

Each group has three independent suction hood groups 13, two groups mounted on the upper section and one mounted on the lower section, preferably with the separation, removal and collating device 12 constituted by a toothed rotating blade cutting group provided with specific vertical adjustment that cuts the panel, producing powder chips separated from the surface coatings.

The main groups that constitute each module of the transverse cutting station, with subsequent squaring and profiling section, are a lateral motorisation group, a suction hood adjustment group 13 and upper incision elements, a cutting group with electronically controlled horizontal and vertical movement, a group of chains or belts for feeding the panel, a group for excluding the lower incision elements, a group for lateral movement of the push chains of the panel and a group of right and left hoppers.

The processes and methods used to separate the chips resulting from the removal of the surface coating strips and the chips resulting from the profiling of the underlying pure foam layer in the multiple transverse squaring and profiling step 106 are the same as those already described for the longitudinal profiling step.

The transverse squaring and profiling station 106 for panels with shaped profiles is preferably composed of several stations or modules 36 placed in parallel, provided with the same functions as described for the longitudinal profiling stations. A single module is shown in Figure 11.

Each station provides for a group that acts as a transverse abutment for the panel, a lower feeding and transport group with controlled left and right belts, a left press group with controlled pressure and transport belt, a right press group with controlled pressure and transport belt (not shown in the figure), cutting tools 9, 9', 9", 9"', comprising a left and right upper coating strip removal incision group and a left and right lower coating strip removal incision group, a group of suction hoods 13 on the left shoulder and one on the right shoulder of the panel for collecting the coating chips, a separation, removal and collating device 12 comprising a left upper and lower chip removal group and a right upper and lower chip removal group operating downstream of the cutting tools 9, 9', 9", 9"', comprising the incision groups and whose chips are collected separately by specific suction hoods 13, a mobile profiling group 42 with a settable tool for producing different profiles, for instance with a triple diameter tool, one on the right shoulder of the panel and one on the left shoulder, a profiling group.

As variants for the incision groups used to remove the surface coating strips, shown in Figures 16-20, they can be made with either rotating toothed blades or smooth-edged blades driven by motors, or smooth-edged blades driven by motors and provided with ultrasonic oscillators, alternatively indicated with the configurations and methods of use already illustrated for the different types of groups that incise and remove the upper and lower coating strips.

Downstream of all of the profiling and cutting steps described above, carried out by means of the aforementioned plant, a final packing and stacking step 114 is provided.

It should be noted that the method and plant according to the present invention allows overcoming the drawbacks of known solutions, primarily by promoting the reuse of material in the production of insulating panels, by isolating the part of the panel that can actually be reused from the part that would "pollute" it, making it unusable.

In fact, during the cutting and profiling steps, the high levels of rigid polyurethane foam waste resulting from the cutting chip are recovered, while at the same time ensuring the increasingly high standards of thermal insulation required for the energy classification of buildings.

Therefore, the recycling of industrial polyurethane waste linked to the production, cutting and profiling process of the panels produced in continuous solves the problem of the quantity of waste produced, optimises its value and complies with the progressive regulations in the field, which are set to become increasingly stringent over the next decade.

Once the pure powder, generally of polyurethane, has been recovered, both mechanical and chemical reuse of the waste can be carried out, without the presence of scraps from covering materials such as millesimal aluminium, paper with layers of fibreglass, bitumen, plastic mixed in the scraps.

It is also possible to adopt the solution of the present invention by making modifications to existing production plants, without any particular mechanical complexity in such implementation.

Obviously, a person skilled in the art, in order to meet contingent and specific requirements, may make numerous modifications and variations to the method e plant above described, all included in the scope of protection of the invention as defined by the following claims.

In particular, it is possible to combine the various detail solutions described in equipment different from the exemplifying ones above described.

## Claims

1. Improved method (100) for the production and profiling of insulating panels comprising a central layer and two outer coating layers on surfaces which are opposite said central layer, said method comprising at least the following steps:
- production (101) of a continuous strip of insulating panel;
- first sectioning cut (103) of a first panel segment (5) which is transverse to a sliding direction of said continuous strip;
- longitudinal lateral profiling (104) of said first panel segment (5);
- second multiple transverse cut (105) of said first panel segment (5) into a plurality of second panel segments (10) and preferably transverse squaring and profiling (106) of said second segments;
**characterized in that**
at least one of said longitudinal lateral profiling step (104) and/or said multiple second transverse cutting step (105) and/or said transverse squaring and profiling step (106) comprises a removal, or peeling, and collating step (107) of at least one portion of at least one or both said two outer layers, or coatings, and a separate removal and recovery and collating step (108) of the related central layer,
wherein said removal step (107) comprises an incision, lifting or removal, removing and collating step (109) of at least one of two or both strips comprising said outer coating layers of surfaces opposite said central layer, thus generating a surface groove by cutting and removing said outer layers comprising a first foam thickness adhering thereto at said surface groove.

2. Method (100) according to claim 1, wherein said longitudinal lateral profiling step (104) and preferably said transverse squaring and profiling step (106) remove and shape the profile of said insulating foam central layer up to an edge of the respective separately removed and collated outer coating.

3. Method (100) according to claim 1, wherein said incision, lifting or removal, removing and collating step (109) of at least one of the two strips or both said two strips of said opposite outer coating layers is carried out at edges of the final profiling of said panel comprising the coating and said first foam thickness adhering thereto.

4. Method (100) according to claim 1, wherein said incision, lifting or removal, removing and collating step (109) is carried out by means of at least one toothed rotating blade tool and provides a collating step of the chips produced by means of suction conveyed through a suction hood which includes said tool.

5. Method (100) according to claim 1, wherein said incision, lifting or removal, removing and collating step (109) is carried out by means of at least one incision along crossed planes, one of which is perpendicular to the surface to be removed and one is parallel to the outer layer to be removed, said incision being carried out by means of a smooth-edged blade cutting tool.

6. Method (100) according to claim 1, wherein said incision, lifting or removal, removing and collating step (109) is carried out by at least one smooth-edged blade rotating circular tool.

7. Method (100) according to claim 1, wherein said incision, lifting or removal, removing and collating step (109) is carried out by at least one smooth-edged blade tool energized and set into vibration by ultrasonic frequency vibrations.

8. Method (100) according to any one of claims 1 to 7, wherein said incision, lifting and removing step (109) of at least one of said two strips of said opposite outer layers provides a lifting and a shredding of at least one of said two strips.

9. Method (100) according to any one of claims 1 to 8, wherein said incision, lifting and removing step (109) of at least one of said two strips of said outer layers provides the lifting and the winding around a rotating shaft or reel located downstream of said lifting.

10. Method (100) according to any one of claims 1 to 9, comprising an outputting step of an air flow (110) grazing at least one of said two strips of said opposite layers and a suction step (111) of said at least one of said two strips of said outer layers.

11. Method (100) according to claim 10, further comprising a brushing step (113) at at least one of said two strips by means of a brushing device (14).

12. Method (100) according to any one of claims 1 to 11, further comprising a longitudinal pre-calibration step (102) of the edges downstream of said production step (101) of a continuous strip of insulating panel.

13. Method (100) according to claim 11, wherein said longitudinal pre-calibration step (102) comprises a removal, or peeling, and collating step (107) of at least one portion of at least one or both said two outer layers, and a separate removal and recovery and collating step (108) of the related central layer.

14. Method (100) according to claim 11, wherein said longitudinal pre-calibration step (102) comprises an incision, lifting or removal, removing and collating step (109) of at least one of the two strips or both said two strips of said opposite outer layers, carried out at the final profiling edges of said panel by removing said outer layers and a first foam thickness adhering thereto.

15. Method (100) according to claim 1, further comprising a median longitudinal cutting step for producing half-width panels comprising a first longitudinal incision, lifting or removal and removing step (109) of at least one of the two strips or both said two strips of said opposite outer layers carried out at the edges of said median longitudinal cut of said panel comprising the coating and a first foam thickness adhering thereto and a subsequent separate removal step of the central section of the panel at said median longitudinal cut.

16. Production plant (1) of insulating panels comprising a central layer and two outer layers which are opposite said central layer, adapted to implement the method according to any one of claims 1 to 15, said plant (1) comprising a foaming, transport and forming station (2) for said continuous strip of insulating panel, a transverse tracking cutting station, a cooling station (6), at least one longitudinal lateral profiling station (7), at least one transverse multiple cutting station (8) for producing separate panels from said continuous strip, at least one of said stations comprising at least one cutting tool (9, 9', 9", 9‴), at least one separate removal and conveying device (11), removal and collating of a portion of at least one or both said two outer layers, preferably at the edges to be profiled, at least one separation, removal and collating device (12) of said central layer separately from said portion of at least one or both said two outer layers and, preferably, at least one profiling group (42).

17. Plant (1) according to claim 16, further comprising a longitudinal central cutting and separation station of said panel provided with a second separation, removal and collating station comprising at least one cutting and collating tool (9, 9', 9") of a portion of each of the two outer layers at the central separation profile, at least one second separation, removal and collating device (12) of the chip of the central layer.

18. Plant (1) according to claim 16 or 17, said plant (1) comprising at least one longitudinal profiling station of said panel provided with at least one separation, removal and collating section comprising at least one cutting tool (9, 9', 9", 9‴) and at least one separate removal and conveying device (11), removal and collating of a portion of at least one or both said two outer layers (15) at the straight or overlapping or interlocking longitudinal profiling shape and at least one longitudinal profiling section for carrying out said longitudinal profiling provided with said separation, removal and collating device (12) of the chip of the central layer separately from said portion of at least one or both said two outer layers (15) and, preferably, of said at least one profiling group (42).

19. Plant (1) according to any one of claims 16 to 18, comprising at least one multiple transverse sectioning cutting station, comprising at least one cutting tool (9, 9', 9", 9‴) for a transverse separation of said panel provided with at least one separation section and at least one removal and collating device (11) of a portion of at least one or both said two outer layers (15) at at least one of the transverse separation profiles and at least one transverse cutting and separation section provided with said separate separation, removal and collating device (12) of the chip of the central layer and, preferably, with said at least one profiling group (42).

20. Production plant (1) according to any one of claims 16 to 19, comprising at least one multiple transverse profiling station provided with at least one transverse squaring and profiling section of said panels, at least one group of said section comprising a separation, removal and collating unit of a portion of at least one or both said two outer coating layers (15) and at least one cutting tool (9, 9', 9", 9‴) at the straight or overlapping or interlocking transverse profiling shape and at least one transverse profiling section for at least one of two transverse sides for carrying out a transverse-shaped trimming and provided with said separation, removal and collating device (12) of the chip obtained from the profiling of the central layer separately from said portion of at least one or both said two outer layers (15) and, preferably, provided with said at least one profiling group (42).

21. Production plant (1) according to any one of claims 16 to 20, further comprising a pre-calibration station for carrying out a straight-profiled trimming at the exit of a conveyor, said pre-calibration station comprising at least one separation, removal and collating unit of a portion of at least one or both said two outer layers (15) and of a first foam thickness adhering thereto at the outer edges of said panel and at least one cutting tool (9, 9', 9", 9‴), said pre-calibration station further comprising said separation, removal and collating device (12) of the chip obtained by the separate removal of the central section of the panel at the pre-calibration edges.

22. Production plant (1) according to any one of claims 16 to 21, comprising at least one chip suction hood (13), with electronic adjustment of the vertical position of bulkheads.
